# EUROPÄISCHE PATENTSCHRIFT

(11) **EP 4 608 133 B1**
(45) Veröffentlichungstag und Bekanntmachung des Hinweises auf die Patenterteilung: **19.08.2026**
(21) Anmeldenummer: 23794313.9
(22) Anmeldetag: 23.10.2023
(51) Int. Cl.: A01M 3/00

(54) **INSEKTENAUFNAHME**
INSECT PICK-UP
CAPTEUR D'INSECTES

(30) Priorität: 28.10.2022 DE 102022128662
(43) Veröffentlichungstag der Anmeldung: 03.09.2025
(73) Patentinhaber: TLD Natur GmbH, 74564 Crailsheim (DE)
(72) Erfinder: MÜLLER, Thomas, 74564 Crailsheim (DE); BÖHME, Luisa, 74564 Crailsheim (DE); WESTRAM, Jürgen, 74562 Crailsheim (DE); GERBER, Dominic, 74586 Frankenhardt (DE)
(74) Vertreter: Hafner & Kohl PartmbB
(86) Internationale Anmeldenummer: PCT/EP2023/079444
(87) Internationale Veröffentlichungsnummer: WO 2024/088946

(56) Entgegenhaltungen:
- EP-A1- 0 615 687
- WO-A2-2017/194846
- CN-C- 100 409 744
- DE-U1- 202020 003 587
- JP-A- 2020 000 118
- US-A- 5 207 018
- US-A1- 2013 097 917

## Beschreibung

### GEBIET DER ERFINDUNG

Die vorliegende Erfindung betrifft eine Vorrichtung zum schonenden Fangen von Insekten.

### HINTERGRUND DER ERFINDUNG

Im Stand der Technik sind Vorrichtungen zum Fangen von Insekten bekannt.

Beispielsweise ist auf die Dokumente DE 20 2020 003587 U1, US 2013/097917 A1, US 5 207 018 A, CN 100 409 744 C, EP 0 615 687 A1, WO 2017/194846 A2 und JP 2020 000118 A zu verweisen.

### ZUSAMMENFASSUNG DER ERFINDUNG

Das Einfangen von Insekten, die sich beispielsweise in ein Haus verirrt haben, kann sich als schwierig erweisen. Oft fehlt hierzu auch das geeignete Instrumentarium, um die Insekten möglichst schonend und lebendig zu fangen und "an die frische Luft zu setzen". Dies gilt insbesondere deswegen, da Insekten die Angewohnheit haben, in Ecken oder verwinkelten Bereichen zu flüchten.

Eine Aufgabe ist daher, eine Vorrichtung zur Verfügung zu stellen, die geeignet ist, Insekten schonend lebendig aufzunehmen und insbesondere in verwinkelten Bereichen zu fangen.

Die Erfindung ist durch die Gegenstände der beigefügten Ansprüche definiert, welche im Lichte der Beschreibung und der Zeichnungen auszulegen sind.

Ein erster Aspekt der Erfindung betrifft eine Vorrichtung zum schonenden Fangen von Insekten gemäß Anspruch 1.

Ein zweiter Aspekt der Erfindung betrifft eine Vorrichtung zum schonenden Fangen von Insekten gemäß Anspruch 9.

Beispielhafte Ausführungsformen werden in den abhängigen Ansprüchen beschrieben.

Gemäß einer beispielhaften Ausführungsform der Erfindung wird eine Vorrichtung zur Verfügung gestellt, wobei der flache Bereich und der Aufnahmebereich eine abgeflachte Seite aufweisen, sodass die Vorrichtung ein Insekt in einer Ecke aufnehmen kann.

Durch eine abgewinkelte oder abgeflachte Form des Aufnahmebereichs wird es der erfindungsgemäßen Vorrichtung ermöglicht, in Ecken einzufahren, um dort hin geflüchtete Insekten aufzunehmen.

Gemäß einer beispielhaften Ausführungsform der Erfindung wird eine Vorrichtung zur Verfügung gestellt, wobei der flache Bereich und/oder der Aufnahmebereich Luftlöcher aufweisen.

Durch die Anordnung von Luftlöchern oder Ausnehmungen kann eine Luftzufuhr der Insekten sichergestellt werden. Außerdem kann das Insekt beobachtet bzw. taxiert werden.

Gemäß einem weiteren Ausführungsbeispiel der vorliegenden Erfindung wird eine Vorrichtung zur Verfügung gestellt, wobei der Stiel der Abdeckung mit dem Stiel der Aufnahme derart korrespondieren, dass der Stiel entlang des Stiels verfahren werden kann.

Durch die komplementäre Ausbildung der jeweiligen Stiele wird zum einen eine Verfahrbarkeit und damit ein Öffnen und Schließen des Aufnahmebereichs ermöglicht. Zusätzlich wird sichergestellt, dass die Abdeckung und die Aufnahme der erfindungsgemäßen Vorrichtung verbunden sind und damit nicht verloren gehen. Gemäß einem weiteren Ausführungsbeispiel der vorliegenden Erfindung wird eine Vorrichtung zur Verfügung gestellt, wobei die Aufnahme und/oder die Abdeckung eine Führungsschiene an dem Stiel aufweist, wobei die Abdeckung oder die Aufnahme in der Führungsschiene bewegt werden kann.

In einer weiteren erfindungsgemäßen Ausführungsform wird eine Vorrichtung zur Verfügung gestellt, wobei eine Erhebung in einer Nut der Führungsschiene geführt ist.

In einer weiteren erfindungsgemäßen Ausführungsform wird eine Vorrichtung zur Verfügung gestellt, wobei der Stiel der Abdeckung und der Stiel der Aufnahme jeweils eine korrespondierende Führungsschiene aufweisen, wodurch die Aufnahme und die Abdeckung zueinander entlang des jeweiligen Stiels verschiebbar sind.

In einer weiteren erfindungsgemäßen Ausführungsform wird eine Vorrichtung zur Verfügung gestellt, wobei ein Zusammenbau bzw. ein Einfädeln der Abdeckung und der Aufnahme im äußeren Bereich der jeweiligen Stiele erfolgt, die jeweils nicht benachbart zu dem flachen Bereich bzw. dem Aufnahmebereich sind.

Hierdurch kann die Vorrichtung so gestaltet werden, dass sie im geöffneten Zustand, in dem der flache Bereich nicht auf dem Aufnahmebereich liegt, Freiheitsgrade aufweist, damit ein Zusammenbau und ein Einfädeln der Abdeckung auf die Aufnahme ermöglicht wird. Vorteilhafterweise kann die Vorrichtung derart dann gestaltet werden, dass im geschlossenen Zustand, in dem der flache Bereich auf dem Aufnahmebereich aufliegt, keine Freiheitsgrade bestehen und damit ein fester Verschluss vorliegt.

In einer weiteren erfindungsgemäßen Ausführungsform wird eine Vorrichtung zur Verfügung gestellt, wobei ein Zusammenbau bzw. ein Einfädeln der Abdeckung und der Aufnahme im äußeren Bereich der jeweiligen Stiele erfolgt, die nicht benachbart zu dem flachen Bereich bzw. dem Aufnahmebereich sind und/oder wobei die Führungsschienen der Stiele im geschlossenen Zustand im von dem flachen Bereich bzw. dem Aufnahmebereich benachbarten Bereich einen kleinen Abstand aufweisen und im von dem flachen Bereich bzw. dem Aufnahmebereich entfernten Bereich einen großen Abstand aufweisen, wodurch zum einen das Einfädeln erleichtert wird und zum anderen ein dichtes Schließen des flachen Bereichs auf den Aufnahmebereich ermöglicht wird.

In einer weiteren erfindungsgemäßen Ausführungsform wird eine Vorrichtung zur Verfügung gestellt, wobei im geschlossenen Zustand, falls der flache Bereich auf dem Aufnahmebereich angeordnet wird, die Stiele einen Anpressdruck des flachen Bereichs auf den Aufnahmebereich erzeugen.

Durch einen Anpressdruck der Abdeckung auf die Aufnahme im geschlossenen Zustand wird ein sicheres Verschließen garantiert.

In einer weiteren erfindungsgemäßen Ausführungsform wird eine Vorrichtung zur Verfügung gestellt, wobei die Führungsschienen der Stiele einen Winkel zueinander aufweisen, sodass der flache Bereich beim Schließen nicht parallel zum Aufnahmebereich zuläuft, sondern in einem Winkel und/oder wobei der Winkel zwischen 1° und 5° ist, insbesondere 3°, wodurch ein Anpressdruck des flachen Bereichs auf den Aufnahmebereich im geschlossenen Zustand erzeugt wird.

Als eine Idee der Erfindung wird angesehen, eine Lebendfalle für Insekten zur Verfügung zu stellen, wobei die Vorrichtung zum schonenden Fangen dient. Hierdurch kann ein Insekt beispielsweise in Ruhe klassifiziert werden. Die erfindungsgemäße Vorrichtung umfasst insbesondere zwei Teile, die zueinander derart verschoben werden können, dass ein Aufnahmebereich für Insekten geöffnet und wieder geschlossen werden kann.

Die erfindungsgemäße Vorrichtung wird vorzugsweise aus Kunststoff gefertigt und weist in ihrem Aufnahmebereich Löcher auf, um darin gefangene Insekten begutachten zu können. Die Vorrichtung umfasst einen Fangbehälter bzw. Aufnahme und einen Schieber bzw. Abdeckung, wobei der Schieber über den Fangbehälter angeordnet werden kann. Erfindungsgemäß weist die Aufnahme an ihrem Stiel eine Führungsschiene auf, in der der Stiel der Abdeckung verfahren werden kann. Die Aufnahme bzw. die Abdeckung können einen Schiebeknopf aufweisen, um die Aufnahme gegenüber der Abdeckung verschieben zu können.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigen
- Fig. 1: eine Abdeckung 8 einer Vorrichtung zum schonenden Fangen von Insekten,
- Fig. 2: eine Aufnahme 9 einer erfindungsgemäßen Vorrichtung,
- Fig. 3: eine Abdeckung 8, die nicht über dem Aufnahmebereich 6 einer Aufnahme 9 angeordnet ist,
- Fig. 4: eine geschlossene erfindungsgemäße Vorrichtung und
- Fig. 5: eine geschlossene erfindungsgemäße Vorrichtung, die hochkant gelagert ist.

### DETAILLIERTE BESCHREIBUNG BEISPIELHAFTER AUSFÜHRUNGSFORMEN

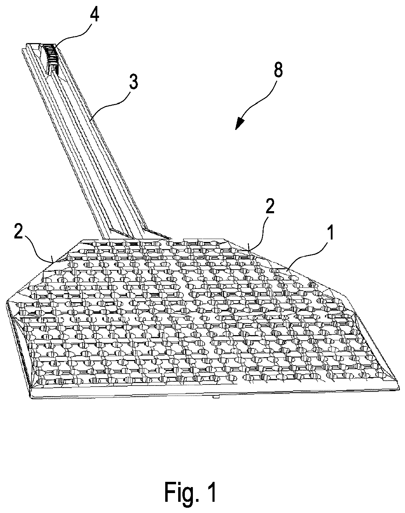

Fig. 1 zeigt einen Teil einer erfindungsgemäßen Vorrichtung zum Fangen von Spinnen, Bienen und anderen Insekten. Dargestellt ist der obere Bereich der erfindungsgemäßen Vorrichtung mit der Abdeckung 8, die auf eine Aufnahme geschoben werden kann, sodass Insekten bzw. Bienen lebend gefangen werden können. Die Abdeckung 8 umfasst einen Griff und eine Führungsschiene, sodass eine Aufnahme 9 zur Abdeckung 8 verfahren werden kann. Der flache Bereich 1 der Abdeckung weist eine trapezförmige Form auf, sodass die Abdeckung 8 in Ecken hinein geführt werden kann.

Die Abdeckung 8 enthält am Griff/Stiel 3 eine Ausnehmung 10, die zum Aufhängen der Abdeckung bzw. der gesamten erfindungsgemäßen Vorrichtung dient. Der Griff/Stiel 3 hat eine wellenförmige Rasterung auf der Innenseite, damit die Abdeckung 8 mit der Aufnahme 9, die eine korrespondierende wellenförmige Rasterung aufweist, gehalten und verriegelt werden kann. Außerdem weist der Griff/Stiel 3 eine Begrenzung auf, damit die Aufnahme 9 nicht über den Griff/Stiel 3 der Abdeckung 8 hinaus geschoben werden kann.

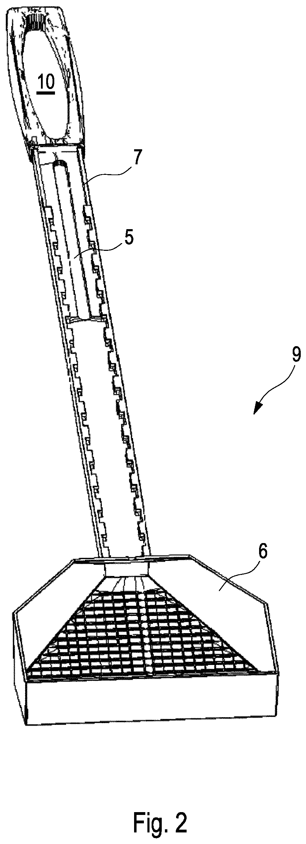

Fig. 2 zeigt eine Aufnahme für Insekten 6, die an einem Stiel 7 angeordnet ist. Der Aufnahmebereich 6 ist nach vorne ca. 2 cm. versetzt, sodass die Vorrichtung zum Fangen von Insekten besser in Ecken gelangen kann. Der Aufnahmebereich 6 weist eine trapezförmige Ausgestaltung auf, die der der Abdeckung 8 entspricht.

Der Aufnahmebereich 6 ist entsprechend zum flachen Bereich 1 ausgeformt, sodass der Aufnahmebereich 6 abgerundete Eckbereiche aufweist, die der trapezförmigen Form des flachen Bereichs 1 entsprechen. Hierdurch ist ein Bewegen der erfindungsgemäßen Vorrichtung in Ecken erleichtert.

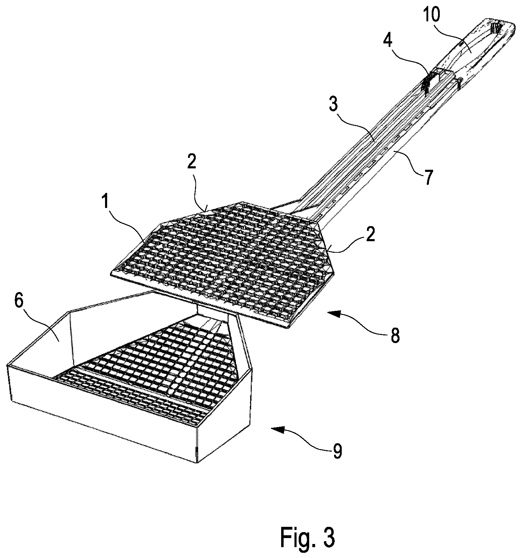

Fig. 3 zeigt die komplette Vorrichtung zum schonenden Fangen von Insekten, wobei die Abdeckung 8 einen flachen Bereich 1 mit Luftlöchern bzw. Ausnehmungen aufweist. Der flache Bereich 1 der Abdeckung 8 kann über die Aufnahme 9 geschoben werden, sodass ein Insekt, das in dem Aufnahmebereich 6 ist, in der Vorrichtung gefangen werden kann. Hierdurch ist es möglich, das Insekt schonend an einen anderen Ort zu verbringen. Der Aufnahmebereich 6 der Aufnahme 9 weist Luftlöcher auf, sodass ein Insekt weiterhin Sauerstoff erhält. Der Stiel 3 der Abdeckung 8 ist derart geformt, dass er mit dem Stiel 7 der Aufnahme 9 korrespondiert und entlang laufen kann.

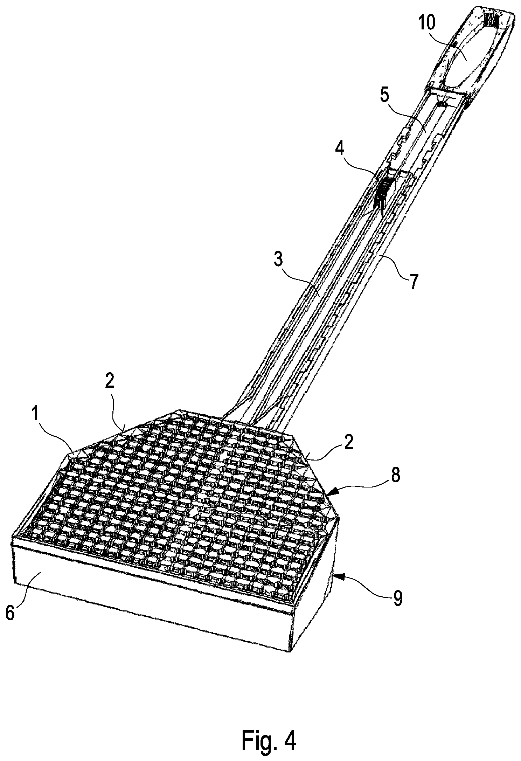

Fig. 4 zeigt den Aufnahmebereich 6 der Aufnahme 9, der durch den flachen Bereich 1 der Abdeckung 8 geschlossen ist, sodass Insekten innerhalb des Aufnahmebereichs 6 gefangen sind. Die Vorrichtung weist abgeflachte Seiten 2 auf, sodass die Vorrichtung auch für Insekten anwendbar sind, die sich in Ecken befinden.

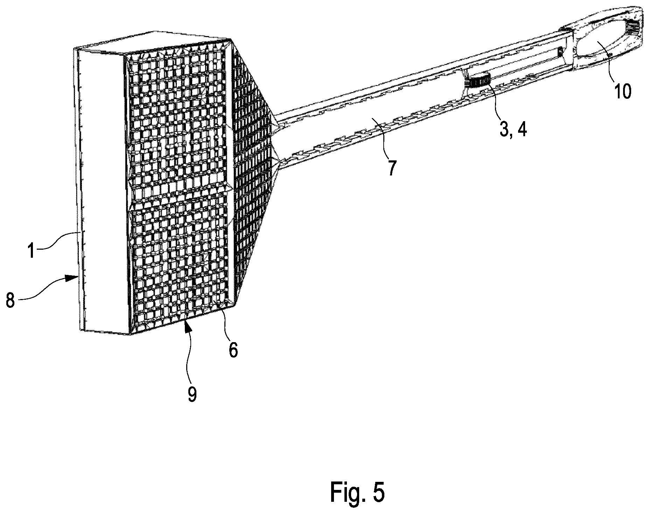

Fig. 5 zeigt die geschlossene Vorrichtung in einer Seitenansicht mit dem Stiel 7 und der Ausnehmung 5 und einem geschlossenen Aufnahmebereich 6.

Eine weitere erfinderische Ausführungsform weist eine durchgängige Nut über den kompletten Stiel 3 der Abdeckung 8 oder den Stiel 7 der Aufnahme 9 auf, wodurch insbesondere eine komplementäre Erhebung über die komplette Länge des Stiels 7 der Aufnahme 9 oder des Stiels 3 der Abdeckung 8 verschoben werden kann. Hierdurch kann ein beliebig großer Aufnahmebereich 6 gestaltet werden.

In einer weiteren erfinderischen Ausführungsform wird die Vorrichtung derart ausgeführt, dass ein Einfädeln der jeweiligen zueinander komplementären Führungsschienen der Stiele 3 und 7 am äußeren Ende und nicht an dem Ende des Stiels erfolgt, der dem Aufnahmebereich 6 bzw. dem flachen Bereich 1 benachbart ist. Hierdurch wird ermöglicht, dass bei geschlossenem Aufnahmebereich 6 die Stiele 3 und 7 derart ausgebildet sind, dass ein Anpressdruck des flachen Bereichs 1 auf den Aufnahmebereich 6 ausgeübt wird, und damit der Aufnahmebereich 6 dicht geschlossen ist.

Die erfindungsgemäße Ausführungsform ist daher derart ausgebildet, dass die Abdeckung am hinteren Ende der Aufnahme eingefädelt wird und nicht an dessen vorderem Ende, das nahe am Aufnahmebehälter ist. Es liegen daher bei geschlossener Vorrichtung keine Freiheitsgrade vor, die eine undichte Aufnahmebereich zur Folge haben können.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 1: flacher Bereich der Abdeckung 8
- 2: Kante des flachen Bereichs 1
- 3: Stiel der Abdeckung 8
- 4: Hervorhebung des Stiels 3
- 5: Nut der Aufnahme 9
- 6: Aufnahmebereich
- 7: Stiel der Aufnahme 9
- 8: Abdeckung
- 9: Aufnahme
- 10: Ausnehmung der Abdeckung 8

## Patentansprüche

1. Vorrichtung zum schonenden Fangen von Insekten, umfassend:
eine Abdeckung (8) mit einem flachen Bereich (1) und
eine Aufnahme (9) mit einem Aufnahmebereich (6), wobei der flache Bereich (1) den Aufnahmebereich (6) verschließen kann, sodass ein Insekt darin gefangen werden kann, wobei
die Abdeckung (8) und die Aufnahme (9) jeweils einen Stiel (3, 7) mit Führungsschienen aufweist, **dadurch gekennzeichnet, dass** die Führungsschienen der Stiele (3, 7) im geschlossenen Zustand im von dem flachen Bereich (1) bzw. dem Aufnahmebereich (6) benachbarten Bereich einen kleineren Abstand aufweisen als im von dem flachen Bereich (1) bzw. dem Aufnahmebereich (6), wodurch zum einen das Einfädeln erleichtert wird und zum anderen ein dichtes Schließen des flachen Bereichs (1) auf den Aufnahmebereich (6) ermöglicht wird.

2. Vorrichtung nach einem der Ansprüche 1, wobei der flache Bereich (1) und/oder der Aufnahmebereich (6) Luftlöcher aufweisen.

3. Vorrichtung nach einem der vorhergehenden Ansprüche, wobei der Stiel (3) der Abdeckung (8) mit dem Stiel (7) der Aufnahme (9) derart korrespondieren, dass der Stiel (3) entlang des Stiels (7) verfahren werden kann.

4. Vorrichtung nach einem der vorhergehenden Ansprüche, wobei die Abdeckung (8) und/oder die Aufnahme (9) in den Führungsschienen bewegt werden kann.

5. Vorrichtung nach Anspruch 4, wobei eine Erhebung (4) in einer Nut einer der Führungsschienen geführt ist.

6. Vorrichtung nach einem der vorhergehenden Ansprüche, wobei die Führungsschienen des Stiels (3) der Abdeckung (8) und des Stiels (7) der Aufnahme (9) jeweils korrespondieren, wodurch die Aufnahme (9) und die Abdeckung (8) zueinander entlang des jeweiligen Stiels (3, 7) verschiebbar sind.

7. Vorrichtung nach einem der vorhergehenden Ansprüche, wobei ein Zusammenbau bzw. ein Einfädeln der Abdeckung (8) und der Aufnahme (9) im äußeren Bereich der jeweiligen Stiele (3, 7) erfolgt, die nicht benachbart zu dem flachen Bereich (1) bzw. dem Aufnahmebereich (6) sind.

8. Vorrichtung nach einem der vorhergehenden Ansprüche, wobei die Führungsschienen der Stiele (3, 7) einen Winkel zueinander aufweisen, sodass der flache Bereich (1) beim Schließen nicht parallel zum Aufnahmebereich (6) zuläuft, sondern in einem Winkel und/oder wobei der Winkel zwischen 1° und 5° ist, insbesondere 3°, wodurch ein Anpressdruck des flachen Bereichs (1) auf den Aufnahmebereich (6) im geschlossenen Zustand erzeugt wird.

9. Vorrichtung zum schonenden Fangen von Insekten, umfassend:
eine Abdeckung (8) mit einem flachen Bereich (1) und
eine Aufnahme (9) mit einem Aufnahmebereich (6), wobei der flache Bereich (1) den Aufnahmebereich (6) verschließen kann, sodass ein Insekt darin gefangen werden kann,
die Abdeckung (8) und die Aufnahme (9) jeweils einen Stiel (3, 7) mit zueinander komplementären Führungsschienen aufweist, **dadurch gekennzeichnet, dass**
ein Einfädeln der Führungsschienen an dem Ende der Stiele (3,7), das von dem flachen Bereich (1) bzw. dem Aufnahmebereich (6) entfernt liegt, erfolgt, wobei im geschlossenen Zustand, falls der flache Bereich (1) auf dem Aufnahmebereich (6) angeordnet wird, die Stiele (3, 7) derart ausgebildet sind, dass sie einen Anpressdruck des flachen Bereichs (1) auf den Aufnahmebereich (6) erzeugen.

## Claims

1. A device for gently capturing insects, comprising:
a cover (8) having a flat portion (1), and
a receptacle (9) having a receiving area (6),
wherein the flat portion (1) is configured to close the receiving area (6) such that an insect can be captured therein,
wherein the cover (8) and the receptacle (9) each comprise a handle (3, 7) having guide rails,
**characterized in that** the guide rails of the handles (3, 7), in the closed state, have a smaller spacing in the region adjacent to the flat portion (1) and the receiving area (6), respectively, than in the region remote from the flat portion (1) and the receiving area (6), respectively, thereby facilitating insertion on the one hand and enabling tight closure of the flat portion (1) against the receiving area (6) on the other hand.

2. The device according to claim 1, wherein the flat portion (1) and/or the receiving area (6) comprise air holes.

3. The device according to any one of the preceding claims, wherein the handle (3) of the cover (8) and the handle (7) of the receptacle (9) correspond to one another such that the handle (3) can be moved along the handle (7).

4. The device according to any one of the preceding claims, wherein the cover (8) and/or the receptacle (9) can be moved in the guide rails.

5. The device according to claim 4, wherein a projection (4) is guided in a groove of one of the guide rails.

6. The device according to any one of the preceding claims, wherein the guide rails of the handle (3) of the cover (8) and of the handle (7) of the receptacle (9) respectively correspond to one another, whereby the receptacle (9) and the cover (8) are displaceable relative to one another along the respective handle (3, 7).

7. The device according to any one of the preceding claims, wherein an assembly or an insertion, respectively of the cover (8) and the receptacle (9) is carried out in the outer region of the respective handles (3, 7) that is not adjacent to the flat portion (1) or the receiving area (6), respectively.

8. The device according to any one of the preceding claims, wherein the guide rails of the handles (3, 7) are arranged at an angle relative to one another such that, during closing, the flat portion (1) does not approach the receiving area (6) in a parallel manner but at an angle, and/or wherein the angle is between 1° and 5°, in particular 3°, thereby generating a contact pressure of the flat portion (1) against the receiving area (6) in the closed state.

9. A device for gently capturing insects, comprising:
a cover (8) having a flat portion (1), and
a receptacle (9) having a receiving area (6),
wherein the flat portion (1) is configured to close the receiving area (6) such that an insect can be captured therein,
wherein the cover (8) and the receptacle (9) each comprise a handle (3, 7) having guide rails complementary to one another,
**characterized in that**
the guide rails are inserted into one another at the end of the handles (3, 7) remote from the flat portion (1) and the receiving area (6), respectively,
wherein, in the closed state, when the flat portion (1) is arranged on the receiving area (6), the handles (3, 7) are configured such that they generate a contact pressure of the flat portion (1) against the receiving area (6).

## Revendications

1. Dispositif pour la capture en douceur d'insectes, comprenant :
un couvercle (8) avec une zone plate (1) et
un réceptacle (9) avec une zone de réception (6), dans lequel
la zone plate (1) peut fermer la zone de réception (6), de sorte qu'un insecte peut y être capturé, dans lequel
le couvercle (8) et le réceptacle (9) comportent chacun un manche (3, 7) avec des rails de guidage, **caractérisé en ce que** les rails de guidage des manches (3, 7) présentent, à l'état fermé, dans la zone adjacente à la zone plate (1) ou à la zone de réception (6), une distance plus faible que dans la zone éloignée de la zone plate (1) ou de la zone de réception (6), ce par quoi, d'une part, l'enfilage est facilité et, d'autre part, une fermeture étanche de la zone plate (1) sur la zone de réception (6) est rendue possible.

2. Dispositif selon la revendication 1, dans lequel la zone plate (1) et/ou la zone de réception (6) comporte des trous d'aération.

3. Dispositif selon l'une des revendications précédentes, dans lequel le manche (3) du couvercle (8) correspond au manche (7) du réceptacle (9) de telle manière que le manche (3) peut être déplacé le long du manche (7).

4. Dispositif selon l'une des revendications précédentes, dans lequel le couvercle (8) et/ou le réceptacle (9) peut être déplacé dans les rails de guidage.

5. Dispositif selon la revendication 4, dans lequel une saillie (4) est guidée dans une rainure de l'un des rails de guidage.

6. Dispositif selon l'une des revendications précédentes, dans lequel les rails de guidage du manche (3) du couvercle (8) et du manche (7) du réceptacle (9) correspondent respectivement, ce par quoi le réceptacle (9) et le couvercle (8) peuvent être déplacés l'un par rapport à l'autre le long du manche respectif (3, 7).

7. Dispositif selon l'une des revendications précédentes, dans lequel un assemblage ou un enfilage du couvercle (8) et du réceptacle (9) a lieu dans la zone extérieure des manches respectifs (3, 7), lesquels ne sont pas adjacents à la zone plate (1) ou à la zone de réception (6).

8. Dispositif selon l'une des revendications précédentes, dans lequel les rails de guidage des manches (3, 7) présentent un angle l'un par rapport à l'autre, de sorte que la zone plate (1), lors de la fermeture, ne converge pas parallèlement vers la zone de réception (6), mais sous un angle, et/ou dans lequel l'angle est compris entre 1° et 5°, en particulier 3°, ce par quoi une pression d'appui de la zone plate (1) sur la zone de réception (6) est produite à l'état fermé.

9. Dispositif pour la capture en douceur d'insectes, comprenant :
un couvercle (8) avec une zone plate (1) et
un réceptacle (9) avec une zone de réception (6), dans lequel
la zone plate (1) peut fermer la zone de réception (6), de sorte qu'un insecte peut y être capturé,
le couvercle (8) et le réceptacle (9) comportent chacun un manche (3, 7) avec des rails de guidage complémentaires les uns aux autres, **caractérisé en ce que**
un enfilage des rails de guidage a lieu à l'extrémité des manches (3, 7) qui est éloignée de la zone plate (1) ou de la zone de réception (6), dans lequel, à l'état fermé, lorsque la zone plate (1) est disposée sur la zone de réception (6), les manches (3, 7) sont réalisés de telle manière qu'ils produisent une pression d'appui de la zone plate (1) sur la zone de réception (6).
